# EUROPÄISCHE PATENTSCHRIFT

(11) **EP 3 762 187 B1**
(45) Veröffentlichungstag und Bekanntmachung des Hinweises auf die Patenterteilung: **22.06.2022**
(21) Anmeldenummer: 19718226.4
(22) Anmeldetag: 07.03.2019
(51) Int. Cl.: B25J 9/16, B25J 15/06

(54) **ROBOTERSYSTEM ZUM GREIFEN EINER WARE IN EINEM LAGER- UND KOMMISSIONIERSYSTEM UND BETRIEBSVERFAHREN HIERFÜR**
ROBOT SYSTEM FOR GRIPPING AN ITEM IN A STORAGE AND PICKING SYSTEM, AND OPERATING METHOD FOR SAME
SYSTÈME ROBOTISÉ PERMETTANT DE SAISIR UNE MARCHANDISE DANS UN SYSTÈME DE STOCKAGE ET DE PRÉPARATION DE COMMANDES ET PROCÉDÉ DE FONCTIONNEMENT S'Y RAPPORTANT

(30) Priorität: 09.03.2018 AT 502052018
(43) Veröffentlichungstag der Anmeldung: 13.01.2021
(73) Patentinhaber: TGW Logistics Group GmbH, 4614 Marchtrenk (AT)
(72) Erfinder: AIGLSTORFER, Stefan, 4111 Walding (AT); PRECHTL, Christian, 4840 Vöcklabruck (AT); SCHRÖPF, Harald, 4600 Wels (AT)
(74) Vertreter: Burger, Hannes
(86) Internationale Anmeldenummer: PCT/AT2019/060075
(87) Internationale Veröffentlichungsnummer: WO 2019/169417

(56) Entgegenhaltungen:
- EP-A2- 2 783 799
- US-A1- 2015 314 439

## Beschreibung

Die Erfindung betrifft ein Verfahren zur Steuerung eines Roboters in einem Lager- und Kommissioniersystem, welcher einen gegenüber einer Roboterbasis bewegbaren Roboterkopf mit zumindest zwei beabstandeten Sauggreifern aufweist, bei dem eine Greifflächenpose und eine Greifflächengröße einer Greiffläche einer Ware mithilfe eines Sensorsystems ermittelt wird. Weiterhin betrifft die Erfindung ein Robotersystem, welches einen Roboter mit einem gegenüber einer Roboterbasis bewegbaren Roboterkopf umfasst, welcher mit zumindest zwei beabstandeten Sauggreifern ausgestattet ist, sowie ein Sensorsystem zur Erfassung einer Greifflächenpose und einer Greifflächengröße einer Greiffläche einer Ware. Schließlich betrifft die Erfindung ein Lager- und Kommissioniersystem zum Kommissionieren von Waren, umfassend einen Lagerbereich zum Lagern von Waren und einen Arbeitsplatz zum Kommissionieren/Umpacken von Waren mit einem Robotersystem der obigen Art.

Ein Verfahren, ein Robotersystem und ein Lager-und Kommissioniersystem der genannten Art sind grundsätzlich aus der US 9,868,207 B2, der EP 2 984 007 B1, der EP 2 315 714 B1 und der WO 2016/138101 A1 bekannt. Beispielsweise offenbart die US 9,868,207 B2 einen Roboter zum Greifen von Waren in einem Lagersystem. Dabei können Informationen zum Greifen der genannten Waren ermittelt und in Verbindung mit einer Datenbank dazu benutzt werden, eine Greifstrategie festzulegen.

Die EP 2 783 799 A2 offenbart dazu auch ein Robotersystem mit einem Roboterarm und einer Robotersteuerung, wobei der Roboterarm einen Werkstückhalter mit mehreren Sauggreifern aufweist. Zusätzlich weist das Robotersystem einen Laser und eine Kamera zur Erfassung eines mit dem Roboterarm aufzunehmenden Werkstücks auf.

Problematisch an den bekannten Verfahren und Robotersystemen ist, dass ein sicheres Greifen von Waren nicht gewährleistet werden kann und es daher häufig zu Fehlgriffen beziehungsweise zu einem Herunterfallen von Waren vom Roboterkopf kommt.

Eine Aufgabe der Erfindung ist es daher, ein verbessertes Verfahren zur Steuerung eines Roboters in einem Lager- und Kommissioniersystem, ein verbessertes Robotersystem sowie ein verbessertes Lager- und Kommissioniersystem zum Kommissionieren von Waren anzugeben. Insbesondere sollen die oben angegebenen Nachteile überwunden und Fehlgriffe beziehungsweise ein Herunterfallen von Waren vom Roboterkopf vermieden werden.

Diese Aufgabe wird durch ein Verfahren der eingangs genannten Art gelöst, bei dem
- aus der ermittelten Greifflächenpose und Greifflächengröße eine Greifpose für den bewegbaren Roboterkopf berechnet wird, bei der eine maximale Anzahl an Sauggreifern in Kontakt mit der Greiffläche der genannten Ware steht, und
- der Roboterkopf in die berechnete Greifpose bewegt wird und die mit der Greiffläche der genannten Ware in Kontakt stehenden oder kommenden Sauggreifer aktiviert werden, um die Ware aufzunehmen.

Weiterhin wird die Aufgabe der Erfindung durch ein Robotersystem der eingangs genannten Art gelöst, das eine Steuerung aufweist, welche dazu eingerichtet ist,
- aus der ermittelten Greifflächenpose und Greifflächengröße eine Greifpose für den bewegbaren Roboterkopf zu berechnen, bei der eine maximale Anzahl an Sauggreifern in Kontakt mit der Greiffläche der genannten Ware steht, und
- den Roboterkopf in die berechnete Greifpose zu bewegen und die mit der Greiffläche der genannten Ware in Kontakt stehenden oder kommenden Sauggreifer zu aktivieren, um die Ware aufzunehmen.

Schließlich wird die Aufgabe der Erfindung auch durch ein (weitestgehend automatisiertes) Lager- und Kommissioniersystem der eingangs genannten Art gelöst, welches ein (vollautomatisiertes) Robotersystem der oben genannten Art umfasst, das insbesondere mit dem Lagerbereich fördertechnisch verbunden ist.

Durch die vorgeschlagenen Maßnahmen können ein sicheres Greifen von Waren sichergestellt und Fehlgriffe beziehungsweise ein Herunterfallen von Waren vom Roboterkopf weitgehend vermieden werden. Insbesondere erweist sich die Erfindung dann von Vorteil, wenn die Greiffläche der Ware nicht groß genug ist, um mit allen Sauggreifern des Roboterkopfs in Kontakt zu stehen. Die Waren können im oder am ersten Warenträger nebeneinander, übereinander, stehend oder liegend angeordnet sein, insbesondere ungeordnet (chaotisch) beziehungsweise in Wirrlage. "Wirrlage" bezeichnet im gegebenen Zusammenhang die unbestimmte Position und Lage einer Ware im oder am ersten Warenträger beziehungsweise die ungeordnete, chaotische oder zufällige Verteilung der Waren im oder am ersten Warenträger.

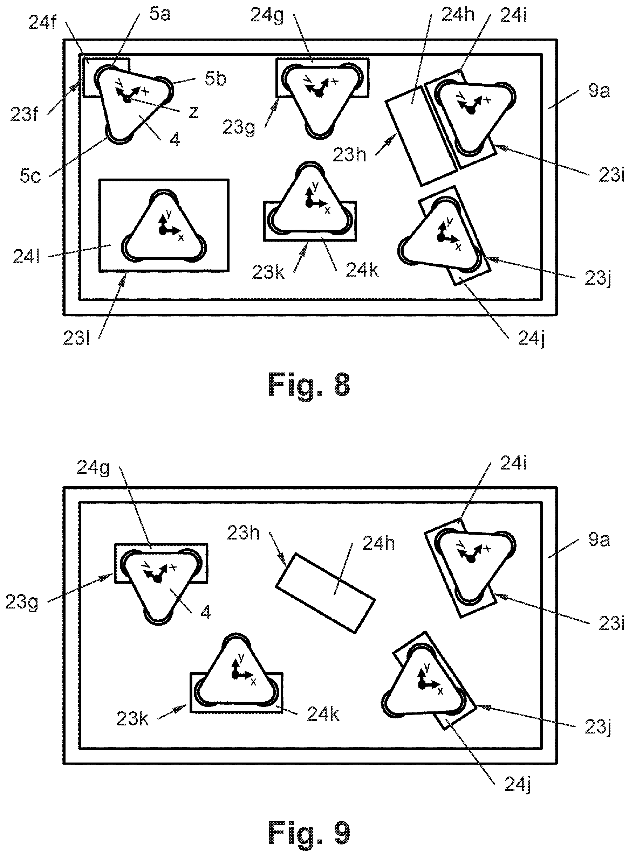

Der Roboterkopf kann um eine oder mehrere Achsen drehbar gegenüber einer Roboterbasis gelagert sein, also um eine Vertikalachse (z-Achse) und/oder zumindest eine Horizontalachse (x-Achse, y-Achse). Dadurch sind nicht nur Drehungen des Roboterkopfs um die Vertikalachse beziehungsweise um eine Horizontalachse möglich, sondern in Kombination auch um eine allgemeine Achse (entsprechend einer Kombination aus einer Drehung des Roboterkopfs um die Vertikalachse und um eine Horizontalachse), beispielsweise wenn die zu greifende Ware in gekippter Lage in oder auf dem Warenträger liegt. Der Roboterkopf kann in der beschriebenen Weise insbesondere um eine oder mehrere Achsen drehbar gegenüber einer Roboterkopf-Basis gelagert sein, die ihrerseits verschiebbar in der Vertikalachse und/oder in einer oder mehreren Horizontalachse gegenüber einer (fix installierten) Roboterbasis gelagert ist. Die Roboterkopf-Basis ist in diesem Fall also im Raum verschiebbar, der Roboterkopf gegenüber dieser Roboterkopf-Basis verdrehbar. Insbesondere wird diese Bauform durch einen seriell-kinematischen Portalroboter verwirklicht, bei dem die Drehachsen des Roboterkopfs die - bezogen auf die seriell-kinematische Logik - am weitesten von der Roboterbasis entfernten Bewegungsachsen des Roboters bilden. Ausgehend von der Roboterbasis folgen also die Drehachsen den Translationsachsen. Ein derartiges Robotersystem mit einem Portalroboter ist in der österreichischen Patentanmeldung A 50886/2018, Fig. 8-14 beschrieben und wird zum Gegenstand dieser Offenbarung gemacht. Grundsätzlich sind aber auch seriell-kinematische Roboter, die nur Drehachsen aufweisen (Knickarmroboter), sowie parallelkinematische Roboter (z.B. Hexapoden) uneingeschränkt für das vorgestellte Verfahren einsetzbar. Durch die vorgeschlagenen Maßnahmen ist die Zugänglichkeit zu praktisch jeder Ware möglich, auch wenn diese in Wirrlage im oder am ersten Warenträger vorliegen.

Der Begriff "Roboterkopf" bezeichnet generell jenen Teil des Roboters, an dem die Sauggreifer angeordnet beziehungsweise angebracht sind. Auf dem Roboterkopf werden mehrere Sauggreifer zu einer Gruppe zusammengefasst. Demgemäß bildet eine Gruppe mehrerer Sauggreifer auch eine "Sauggreifeinheit".

Unter einer "Ware" wird im Rahmen der Erfindung insbesondere ein einzeln handhabbares Objekt beziehungsweise eine einzeln handhabbare Gruppe von Objekten verstanden.

Eine "Pose" ist generell die Kombination von Position und Orientierung im Raum. Eine "Greifflächenpose" ist demgemäß die Kombination von Position und Orientierung der Greiffläche einer Ware und die "Greifpose" die Kombination von Position und Orientierung des Roboterkopfs, wenn eine maximale Anzahl an Sauggreifern in Kontakt mit der Greiffläche der Ware steht.

Generell kann eine "Greiffläche" einer Ware, welche zum Greifen der genannten Ware mit dem Roboter dient, eine beliebige Form aufweisen und beispielsweise polygonförmig (insbesondere rechteckig), kreisförmig oder ellipsenförmig sein oder auch durch eine Freiformfläche gebildet sein.

In einem "Lager- und Kommissioniersystem" können Waren zum Beispiel an einem Wareneingang angeliefert und übernommen werden und sodann gegebenenfalls umgepackt und in einem Lager eingelagert werden. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

Weitere vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn die Waren gemäß einem Auftrag mit Hilfe des Roboterkopfs von oder aus einem ersten Warenträger in oder auf einen zweiten Warenträger umgeladen werden. Ein "Warenträger" kann zum Beispiel ein Ladehilfsmittel (etwa ein Karton, ein Tablar oder ein Behälter oder eine Palette) sein oder durch einen Förderer (etwa einen Bandförderer, einen Rollenförderer oder einen Kettenförderer) gebildet sein. Ein "Warenträger" kann aber auch durch eine Transportplattform (etwa auf einem Regalbediengerät oder einem autonomen Transportfahrzeug) gebildet sein. Der erste Warenträger fungiert dabei als "Quelle", der zweite Warenträger als "Ziel". Der zweite Warenträger kann beispielsweise auch durch eine schwenkbare Klappe gebildet sein. In diesem Fall entnimmt der Roboter von oder aus der Quelle eine Ware und legt dieses auf der Klappe ab. Danach kann diese Ware beispielsweise durch Betätigen, das heißt Hochschwenken, der Klappe in einen weiteren Behälter abgegeben werden.

Vorteilhaft ist es weiterhin, wenn die Waren gemäß einem Auftrag
- mit Hilfe des ersten Warenträgers zum Roboter transportiert werden,
- mit Hilfe des Roboterkopfs von oder aus dem ersten Warenträger in oder auf den zweiten Warenträger umgeladen werden und
- mit Hilfe des zweiten Warenträgers vom Roboter weg transportiert werden.

Bei dieser Variante werden die Waren zum Roboter transportiert, beispielsweise direkt auf einem Bandförderer, einem Rollenförderer oder einem Kettenförderer, beziehungsweise mit einem Ladehilfsmittel auf einem Bandförderer, einem Rollenförderer oder einem Kettenförderer. Der Roboter kann daher statisch an einem Ort verbleiben. Grundsätzlich wäre es aber auch vorstellbar, dass der Roboter als mobiler Roboter ausgebildet ist. Beispielsweise kann der Roboter auf einem autonomen Transportfahrzeug (engl.: Automated Guided Vehicle, kurz "AGV") aufgebaut sein.

Günstig ist es außerdem, wenn im oder auf dem ersten Warenträger eine Vielzahl an Waren gelagert sind und die Greifpose für eine dieser Waren berechnet wird. Auf diese Weise kann gezielt eine bestimmte Ware von oder aus einem Warenträger aufgenommen werden.

Vorteilhaft ist es darüber hinaus, wenn eine Berührung des Roboterkopfs mit einer anderen als der zu greifenden Ware bei der Berechnung der Greifpose für den Roboterkopf beziehungsweise bei der Bewegung des Roboterkopfs in die Greifpose vermieden wird. Dadurch bleibt die Lage und Position der übrigen, im oder auf dem Warenträger verbleibenden Waren auch bei Entnahme einer bestimmten Ware weitgehend erhalten. Daher kann eine einmal durch das Sensorsystem für mehrere Waren ermittelte Greifflächenpose und Greifflächengröße nach der Entnahme der besagten Ware für die Entnahme einer weiteren Ware weiterverwendet werden. Bevorzugt wird die Greifflächenpose und Greifflächengröße jedoch bei jeder Entnahme einer Ware aus oder von dem ersten Warenträger bestimmt. Des Weiteren wird nach jeder erfolgten Entnahme, neuerlich eine Greifpose für eine der Waren, welche im oder auf dem ersten Warenträger verbleiben, berechnet, sofern diese Ware nochmals für eine Auftragsbearbeitung (dies kann denselben Auftrag oder einen anderen Auftrag betreffen) benötigt wird.

Vorteilhaft ist es weiterhin, wenn
- die Ware aus einem als Behälter ausgeführtem Warenträger entnommen wird und
- eine Kollision des Roboterkopfs mit einer Seitenwand des Behälters bei der Berechnung der Greifpose für den Roboterkopf beziehungsweise bei der Bewegung des Roboterkopfs in die Greifpose vermieden wird.

Auch durch diese Maßnahme wird die Lage und Position der übrigen, im Behälter verbleibenden Waren bei Entnahme einer bestimmten Ware weitgehend erhalten. Daher kann auch hier eine einmal durch das Sensorsystem für mehrere Waren ermittelte Greifflächenpose und Greifflächengröße nach der Entnahme der besagten Ware für die Entnahme einer weiteren Ware weiterverwendet werden, wenngleich die Greifflächenpose und Greifflächengröße bevorzugt bei jeder Entnahme einer Ware bestimmt wird. Darüber hinaus werden durch die vorgeschlagenen Maßnahmen natürlich auch Beschädigungen am Behälter beziehungsweise am Roboterkopf vermieden.

Günstig ist es dementsprechend, wenn
- mehrere Greifposen berechnet werden, bei der eine maximale Anzahl an Sauggreifern in Kontakt mit der Greiffläche der genannten Ware steht,
- die berechneten Greifposen vor der Bewegung des Roboterkopfs auf Kollision mit einem anderen als der zu greifenden Ware und/oder mit einer Seitenwand des Behälters geprüft werden und
- der Roboterkopf in eine der kollisionsfreien Greifposen bewegt wird.

Besonders vorteilhaft ist es auch, wenn der Roboterkopf für eine Drehung in die berechnete Greifpose in jene Richtung gedreht wird, in welche ausgehend von einer momentanen Pose der kleinste Drehwinkel für die genannte Drehung erforderlich ist. Dadurch kann der Roboterkopf rasch in eine für die Aufnahme einer Ware benötigte Greifpose gedreht werden. An dieser Stelle wird angemerkt, dass sich die oben genannte Drehung nicht nur auf eine Drehung des Roboterkopfs um die Vertikalachse bezieht, sondern auch auf Drehungen um eine horizontale Achse oder um eine allgemeine Achse (entsprechend einer Kombination aus einer Drehung des Roboterkopfs um die Vertikalachse und um eine horizontale Achse), beispielsweise wenn die zu greifende Ware in gekippter Lage in oder auf dem Warenträger liegt.

Günstig ist es dementsprechend auch, wenn der Roboterkopf bei Vorliegen mehrerer kollisionsfreien Greifposen in jene kollisionsfreie Greifpose bewegt wird, für die ausgehend von einer momentanen Pose des Roboterkopfs der kürzeste Weg und/oder der kleinste Drehwinkel erforderlich ist. Dadurch werden besonders kurze Taktzeiten erzielt.

Besonders vorteilhaft ist es darüber hinaus, wenn ein Flächenschwerpunkt der zu aktivierenden Sauggreifer bei der Berechnung der Greifpose für den Roboterkopf beziehungsweise bei der Bewegung des Roboterkopfs in die Greifpose in Übereinstimmung mit einem Flächenschwerpunkt der Greiffläche der genannten Ware gebracht wird. Dadurch kann eine gleichmäßige Belastung der Sauggreifer erreicht, beziehungsweise ein Kippen der aufgenommenen Ware vermieden werden. Insbesondere trifft dies zu, wenn die Massenverteilung in der aufgenommenen Ware homogen ist.

Besonders vorteilhaft ist es weiterhin, wenn ein Flächenschwerpunkt der zu aktivierenden Sauggreifer bei der Berechnung der Greifpose beziehungsweise bei der Bewegung des Roboterkopfs in die Greifpose in Übereinstimmung mit einem auf die Greiffläche vertikal projizierten Massenschwerpunkt der genannten Ware gebracht wird. Diese Variante ist insbesondere dann von Vorteil, wenn die Massenverteilung in der aufgenommenen Ware nicht homogen ist und die Aufnahme der Ware am Flächenschwerpunkt der Greiffläche nicht zu einer gleichmäßigen Belastung der Sauggreifer führen würde. Stattdessen wird der Flächenschwerpunkt der zu aktivierenden Sauggreifer in Übereinstimmung mit dem auf die Greiffläche vertikal projizierten Massenschwerpunkt der Ware gebracht, wodurch wiederum eine gleichmäßige Belastung der Sauggreifer erreicht, beziehungsweise ein Kippen der aufgenommenen Ware vermieden werden kann. Für die Ausführung dieser Verfahrensvariante ist die Kenntnis der Massenverteilung in der aufzunehmenden Ware erforderlich. Beispielsweise kann diese initial ermittelt und in einer Datenbank abgelegt werden. Etwa kann der Massenschwerpunkt einer Kombipackung, die Nudeln und ein Glas mit Tomatensoße enthält, empirisch ermittelt und in einer Datenbank gespeichert werden. Durch Ermittlung der Greifflächenpose und Zugriff auf die Datenbank kann in Folge der auf die Greiffläche vertikal projizierte Massenschwerpunkt ermittelt werden. Beispielsweise kann dazu auch ein Aufdruck auf die Kombipackung genützt werden, um die Lage des Massenschwerpunkt relativ zu der Verpackung feststellen zu können. Denkbar ist daher auch dass die Datenbank Informationen über die Lage des Massenschwerpunkts relativ zu einer Verpackung, insbesondere relativ zu einem Aufdruck auf der genannten Verpackung, enthält.

Günstig ist es, wenn das Sensorsystem eine Kamera und/oder einen Raumtiefensensor und/oder einen Laserscanner und/oder einen Ultraschallsensor umfasst. Mithilfe dieser Sensoren wird eine Greifflächenpose und eine Greifflächengröße einer Greiffläche einer Ware ermittelt. Mit einer Kamera (Stereokamera), einem Raumtiefensensor, einem Laserscanner oder einem Ultraschallsensor kann ein dreidimensionales Abbild der in oder auf dem Warenträger liegenden Waren erfasst werden. Insbesondere kann dadurch auch eine Schrägstellung der Greiffläche detektiert werden, die durch eine gekippte Lage der aufzunehmenden Ware in oder auf dem Warenträger verursacht wird. Weiterhin kann durch eine dreidimensionale Erfassung der Waren auch eine Oberflächenstruktur der Greiffläche ermittelt und die Eignung für das Greifen durch die Sauggreifer festgestellt werden. Beispielsweise eignen sich stark konvexe Oberflächen weniger für das Greifen durch einen Sauggreifer, wohingegen ebene Flächen besonders gut geeignet für das genannte Greifen sind. Eine Kamera eignet sich insbesondere auch dazu, eine Oberflächenbeschaffenheit der aufzunehmenden Ware, beispielsweise einen Aufdruck auf eine Verpackung, zu erfassen. Auf diese Weise kann beispielsweise die Lage eines Massenschwerpunkts der genannten Ware in Relation zu der Verpackung ermittelt werden. Bei bekannten Formen der Greiffläche kann eine Schrägstellung über die verzerrte Abbildung auch mit lediglich einem zweidimensionalen Abbild ermittelt werden. Eine Schrägstellung der Greiffläche kann darüber hinaus aus mit Hilfe eines dreidimensionalen Abbilds bestimmt werden, das mit mehreren zweidimensionalen Abbildern erstellt wurde. Diese zweidimensionalen Abbilder können beispielsweise von stereometrisch angeordneten Kameras stammen oder aber auch während einer Relativbewegung zwischen Ware und Kamera aufgenommen werden. Dabei kann sich die (einzige) Kamera gegenüber der unbewegten Ware bewegen oder umgekehrt.

An dieser Stelle wird angemerkt, dass sich das vorgestellte Verfahren beziehungsweise der vorgestellte Roboter nicht nur für die Aufnahme von starren Waren, wie zum Beispiel für Schachteln, eignet, sondern auch für verformbare Waren, wie zum Beispiel für Säcke oder Beutel. Sowohl starre Waren als auch verformbare Waren können durch ein einzeln handhabbares Objekt gebildet sein beziehungsweise durch eine einzeln handhabbare Gruppe von Objekten. Konkret kann eine Ware daher beispielsweise als Karton oder Kunststoffbox ausgebildet sein, der/die mit mehreren Objekten gefüllt ist. Gleichermaßen kann eine Ware auch als Sack oder Beutel ausgebildet sein, der mit mehreren Objekten gefüllt ist. Besonders gut eignet sich das erfindungsgemäße Verfahren beziehungsweise Robotersystem für Waren in Form von Folienbeuteln, insbesondere in Form von sogenannten "Polybags" beziehungsweise "Polybeuteln" aus Polyethylen oder Polypropanol. Solche Folienbeutel werden vorwiegend in der Textilindustrie verwendet und beispielsweise zur Verpackung von T-Shirts, Hemden und dergleichen eingesetzt. Häufig werden solche Folienbeutel auch in der Schuhindustrie oder Lebensmittelindustrie verwendet.

Vorteilhaft ist es weiterhin, wenn jeder der Sauggreifer gesondert ansteuerbar ist. Dadurch können die zum Aufnehmen einer Ware erforderlichen Sauggreifer gezielt angesteuert und ein unnötiges Ansaugen von Luft über die nicht benötigten Sauggreifer vermieden werden.

Besonders vorteilhaft ist es auch, wenn ein Haltestatus von jedem der Sauggreifer gesondert ermittelbar ist. Auf diese Weise kann festgestellt werden ob durch einen mit der Greiffläche einer aufzunehmenden Ware in Kontakt gebrachten Sauggreifer eine Haltekraft aufgebaut wird.

Besonders vorteilhaft ist es darüber hinaus, wenn der Roboter genau drei Sauggreifer aufweist, da durch die drei Sauggreifer eine Ebene definiert und eine Ware daher besonders sicher gehalten wird, sofern alle drei Sauggreifer aktiv sind.

Günstig ist es zudem, wenn der Roboter als Gelenkarmroboter oder Portalroboter ausgebildet ist. Diese Bauformen stellen bewährte und erprobte Mittel zum Manipulieren von Waren dar und sind am Markt in vielfältiger Art verfügbar.

Schließlich ist es von Vorteil, wenn der Arbeitsplatz des Lager- und Kommissioniersystems zum vollautomatisierten Kommissionieren von Waren ausgebildet ist, und eine erste Fördertechnik zum Transport von Waren in oder auf ersten Warenträgern (Lagerladehilfsmittel, insbesondere Behälter) zwischen dem Lagerbereich und dem Roboter am Arbeitsplatz angeordnet ist, und/oder eine zweite Fördertechnik zum Abtransport von Waren in oder auf zweiten Warenträgern (Auftragsladehilfsmittel, insbesondere Karton) zwischen dem Lagerbereich und dem Roboter am Arbeitsplatz vorgesehen ist, wobei der Roboter dazu ausgebildet ist, zumindest eine Ware von oder aus den ersten Warenträgern (Lagerladehilfsmittel, insbesondere Behälter) zu je einem Auftrag zu entnehmen und die zumindest eine Ware in oder auf den zweiten Warenträgern (Auftragsladehilfsmittel, insbesondere Kartons) zu diesem Auftrag abzulegen. Auf diese Weise kann ein Kommissioniervorgang besonders effizient und schnell ausgeführt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes, vereinfacht dargestelltes Beispiel für ein Robotersystem mit einem Roboter und einem fix installierten Kamerasystem in Schrägansicht;
- Fig. 2: ähnlich wie Figur 1, jedoch mit einem beweglichen Kamerasystem, mit einer Kamera an einem Roboterarm-Segment des Roboters befestigt ist;
- Fig. 3: ein schematisch dargestelltes Beispiel für ein Lager- und Kommissioniersystem in Draufsicht;
- Fig. 4: einen beispielhaften Roboterkopf mit drei Sauggreifern in Draufsicht;
- Fig. 5: den Roboterkopf aus Figur 4 in Unteransicht;
- Fig. 6: einen beispielhaften Roboterkopf mit zwei Sauggreifern in Unteransicht;
- Fig. 7: einen beispielhaften Roboterkopf mit sechs Sauggreifern in Unteransicht;
- Fig. 8: ein Ladehilfsmittel (zum Beispiel einen Behälter) mit mehreren darin liegenden unterschiedlichen Waren eines ersten Warentyps (starre Waren, wie zum Beispiel Schachteln) und den jeweiligen Waren zugeordnete Greifposen eines Roboterkopfs;
- Fig. 9: ein Ladehilfsmittel (zum Beispiel einen Behälter) mit mehreren darin liegenden identischen (sortenreinen) Waren (dieselben Waren eines ersten Warentyps, wie zum Beispiel Schachteln) und den jeweiligen Waren zugeordnete Greifposen eines Roboterkopfs und
- Fig. 10: ein Beispiel eines Ladehilfsmittels (zum Beispiel eines Behälters) mit mehreren darin liegenden unterschiedlichen Waren eines zweiten Warentyps (verformbare Waren, wie zum Beispiel Polybeutel) und den jeweiligen Waren zugeordnete Greifposen eines Roboterkopfs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

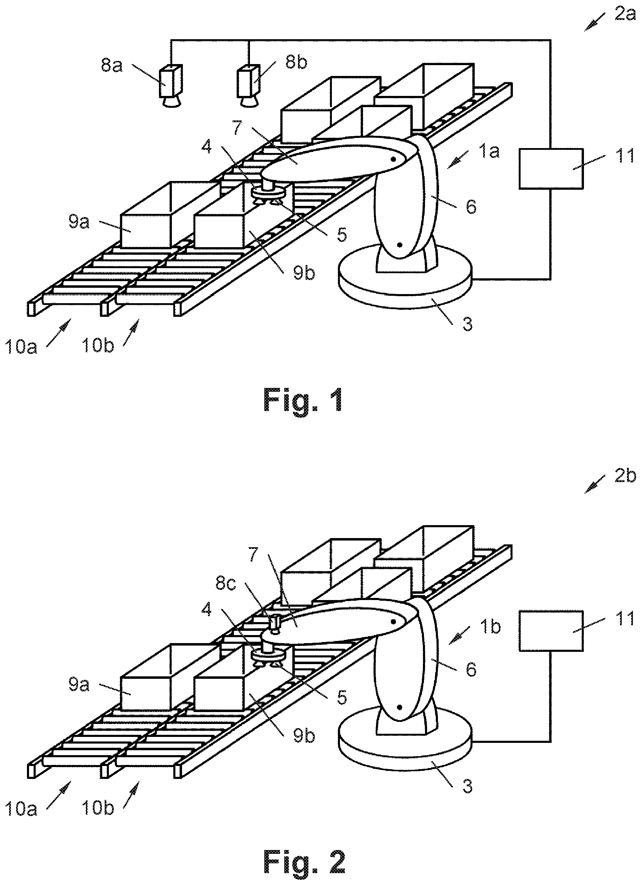

Die Figur 1 zeigt einen Roboter 1a in einem Robotersystem 2a. Der Roboter 1a weist einen gegenüber einer Roboterbasis 3 bewegbaren Roboterkopf 4 auf, welcher in diesem Beispiel drei voneinander beabstandete Sauggreifer 5 aufweist. Der Roboterkopf 4 ist über einen Roboterarm, welcher zwei Armsegmente 6 und 7 aufweist, mit der Roboterbasis 3 gelenkig verbunden. Weiterhin zeigt die Figur 1 ein Sensorsystem 8a, 8b, welches der Erfassung einer Greifflächenpose und einer Greifflächengröße einer Greiffläche einer Ware dient und in diesem Beispiel zwei Kameras umfasst. Die Waren sind in der Figur 1 jedoch nicht sichtbar, da sie in Warenträgern 9a und 9b lagern, die als Behälter ausgeführt sind. Der Behälter 9a ist ein Quellbehälter, aus welchem Waren vom Roboterkopf 4 aufgenommen / entnommen werden, und der Behälter 9b ist ein Zielbehälter, in welchen Waren vom Roboterkopf 4 abgelegt / abgeworfen werden. Die Kameras 8a, 8b sind in diesem Beispiel über den Behältern 9a und 9b angeordnet und jeweils als Stereokamera ausgebildet. Demnach erfassen die Kameras 8a, 8b ein dreidimensionales Abbild vom Inneren zumindest der Behälter 9a und 9b und der darin lagernden Waren. Grundsätzlich könnte auch bloß die Kamera 8a (Stereokamera) oberhalb des Behälters 9a vorgesehen werden. Denkbar ist weiterhin, dass für die Behälter 9a und 9b lediglich eine gemeinsame Kamera 8a (Stereokamera) vorgesehen ist. Auch wenn in einer bevorzugten Ausführung Stereokameras verwendet werden, könnten die Kameras 8a, 8b auch als Kamera zur Erfassung eines zweidimensionalen Abbilds vom Inneren zumindest der Behälter 9a und 9b und den darin lagernden Waren ausgebildet sein.

Die in der Figur 1 gezeigte Anordnung umfasst weiterhin eine Fördertechnik zum Antransport der Behälter 9a, 9b zum Robotersystem 2a und zum Abtransport der Behälter 9a, 9b vom Robotersystem 2a. Insbesondere umfasst die Fördertechnik eine erste Förderstrecke 10a zum Antransport der Behälter 9a, 9b zum Robotersystem 2a und eine zweite Förderstrecke 10b zum Abtransport der Behälter 9a, 9b vom Robotersystem 2a. Schließlich umfasst die in der Figur 1 dargestellte Anordnung eine Steuerung 11, welche mit den Kameras 8a, 8b und dem Roboter 1a verbunden ist und dazu dient, aus der ermittelten Greifflächenpose und Greifflächengröße eine Greifpose für den bewegbaren Roboterkopf 4 zu berechnen, bei der eine maximale Anzahl an Sauggreifern 5 in Kontakt mit der Greiffläche der genannten Ware steht. Weiterhin dient die Steuerung 11 dazu, den Roboterkopf 5 in die berechnete Greifpose zu bewegen und die mit der Greiffläche der genannten Ware in Kontakt stehenden oder in Kontakt kommenden Sauggreifer 5 zu aktivieren, um die Ware aufzunehmen. Die genaue Ausrichtung des Roboterkopfs 5 ist in der Figur 1 nicht im Detail dargestellt, wird jedoch anhand der Figuren 8 bis 10 näher erläutert.

Die Figur 2 zeigt ein Robotersystem 2b, das dem in der Figur 1 dargestellten Robotersystem 2a sehr ähnlich ist. Im Unterschied dazu sind jedoch keine Kameras 8a, 8b oberhalb der Behälter 9a und 9b angeordnet, sondern es ist eine einzige Kamera 8c direkt am zweiten Armsegment 7 des Roboters 1b angeordnet. Diese Kamera 8c ist ebenfalls mit einer Steuerung 11 verbunden (Verbindung nicht dargestellt). Diese Kamera 8c kann wiederum als Stereokamera ausgeführt sein, um ein dreidimensionales Abbild der Behälter 9a und 9b sowie der darin gelagerten Waren zu erfassen, beispielsweise indem die Kamera 8c mithilfe des Roboters 1a über den Behälter 9a oder über den Behälter 9b bewegt und dort ein Bild erfasst wird. Denkbar wäre aber auch, dass die Kamera 8c lediglich zur Erfassung eines zweidimensionalen Abbilds ausgebildet ist, und ein dreidimensionales Abbild der Behälter 9a und 9b sowie der darin gelagerten Waren durch Erfassen mehrerer zweidimensionaler Abbilder während einer Bewegung der Kamera 8c und anschließender Berechnung des dreidimensionalen Abbilds generiert wird. An dieser Stelle wird auch angemerkt, dass die Kamera 8c auch mit den Kameras 8a, 8b aus dem Robotersystem 1a der Fig. 1 kombiniert werden kann.

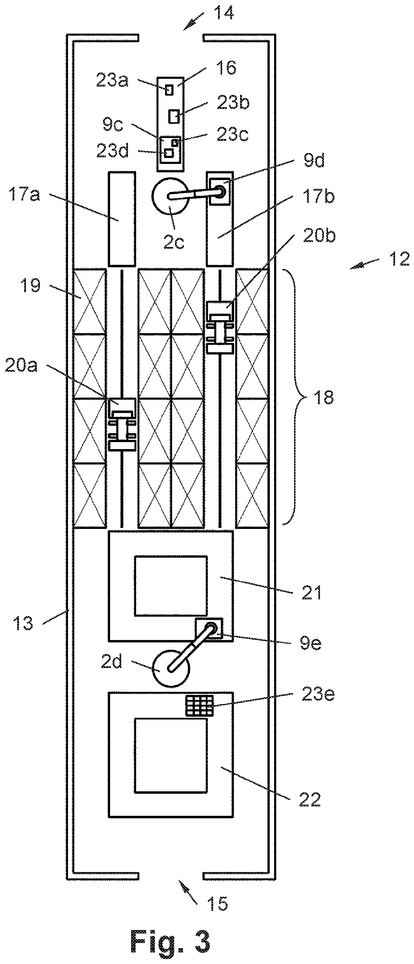

Die Figur 3 zeigt ein Lager- und Kommissioniersystem 12, welches ein Gebäude 13 aufweist, sowie ein Tor an einem Wareneingang 14 und ein Tor an einem Warenausgang 15. Im Bereich des Wareneingangs 14 befinden sich eine erste Förderstrecke 16 und zwei zweite Förderstrecken 17a und 17b. Die erste Förderstrecke 16 verbindet den Wareneingang 14 mit einem Robotersystem 2c. Die zwei zweiten Förderstrecken 17a und 17b verbinden das Robotersystem 2c mit einem Lagerbereich 18, der mehrere Lagerregale 19 sowie Regalbediengeräte 20a und 20b umfasst, die in zwischen den Lagerregalen 19 verlaufenden Regalgassen verfahren. An jenem Ende der Regalgassen, welches den zweiten Förderstrecken 17a und 17b gegenüberliegt, ist eine dritte Förderstrecke 21 angeordnet, die in diesem Beispiel ringförmig ausgebildet ist und zu einem weiteren Robotersystem 2d führt. Im Wirkungsbereich des Robotersystems 2d ist auch eine vierte Förderstrecke 22 angeordnet, welche das Robotersystem 2d fördertechnisch mit dem Warenausgang 15 verbindet.

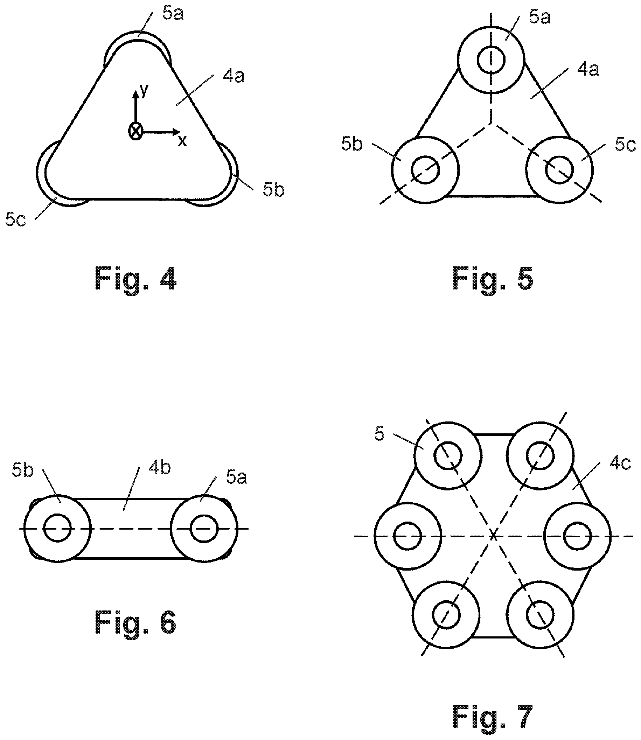

Die Figur 4 zeigt einen Roboterkopf 4a mit drei Sauggreifern 5a, 5b, und 5c nun von oben im Detail. Die Figur 5 zeigt den Roboterkopf 4a mit den drei Sauggreifern 5a, 5b und 5c von unten.

Die Figur 6 zeigt eine weitere Ausführungsform eines Roboterkopfs 4b mit zwei Sauggreifern 5a und 5b von unten. Die Figur 7 zeigt eine weitere Ausführungsform eines Roboterkopfs 4c mit sechs Sauggreifern 5 von unten. Denkbar wäre natürlich auch eine Ausführung eines Roboterkopfs 4, bei der drei Sauggreifer 5a..5c in einer Linie angeordnet sind, so wie das bei der Ausführungsform nach Figur 6 der Fall ist.

In den Beispielen nach den Figuren 4 bis 7 bilden die Sauggreifer 5, 5a..5c jeweils eine S auggreifeinheit.

Die Figuren 8 bis 10 zeigen nun jeweils mehrere Waren 23f..23n, welche in Warenträgern 9a lagern, die in diesem Beispiel als kistenförmige Behälter ausgebildet sind. Weiterhin ist der Roboterkopf 4 mit den Sauggreifern 5a..5c in verschiedenen Greifposen zu sehen.

Die Funktion der in den Figuren dargestellten Anordnungen wird untenstehend nun im Detail erläutert:
In einem ersten Schritt wird mithilfe des in Fig. 1 dargestellten Sensorsystems 8a, 8b (hier mithilfe von zwei Stereokameras) eine Greifflächenpose und eine Greifflächengröße einer Greiffläche einer Ware ermittelt. In einem konkreten Beispiel wird dazu auf die Ware 23f Bezug genommen. Die Ware 23f umfasst eine nach oben weisende Greiffläche 24f auf, die in diesem Beispiel rechteckförmig und eben ausgebildet ist. Aus der ermittelten Greifflächengröße ist erkennbar, dass lediglich einer der Sauggreifer 5a..5c in Kontakt mit der Greiffläche 24f gebracht werden kann. Dementsprechend wird von der Steuerung 11 eine Greifpose für den bewegbaren Roboterkopf 4 berechnet, bei welcher der Sauggreifer 5a in Kontakt mit der Greiffläche 24f steht. In Folge wird der Roboterkopf 4 in die berechnete und in der Figur 8 dargestellte Greifpose bewegt, und es wird der mit der Greiffläche 24f in Kontakt stehende oder während der Bewegung des Roboterkops 4 in Kontakt kommende Sauggreifer 5a aktiviert, um die Ware 23f aufzunehmen.

Im Behälter 9a befinden sich weitere Waren 23g..231. Die Waren 23g..23k haben dabei jeweils eine Greiffläche 24g..24k, welche jeweils mit zwei Sauggreifern 5a und 5b in Kontakt gebracht werden können. Die Ware 231 weist dagegen eine Greiffläche 241 auf, die mit allen drei Sauggreifern 5a, 5b und 5c gebracht werden kann.

Aus der Figur 8 ist insbesondere erkennbar, dass eine Greifpose für den bewegbaren Roboterkopf 4 berechnet wird, bei der eine maximale Anzahl an Sauggreifern 5a..5c in Kontakt mit einer Greiffläche 24f..241 einer Ware 23f..231 gebracht wird, auch wenn die jeweilige Greiffläche 24f..241 nicht groß genug ist, um mit allen drei Sauggreifern 5a..5c des Roboterkopfs 4 in Kontakt zu stehen. Durch die vorgeschlagenen Maßnahmen wird sichergestellt, dass die Waren 23f..231 entsprechend der Größe ihrer Greifflächen 24f..24l jeweils sicher ergriffen werden können und Fehlgriffe beziehungsweise ein Herunterfallen der Waren 23f..23h vom Roboterkopf 4 vermieden werden kann.

Aus der Figur 8 ist weiterhin erkennbar, dass der Flächenschwerpunkt der zu aktivierenden Sauggreifer 5a..5c bei der Berechnung der Greifpose für den Roboterkopf 4 beziehungsweise bei der Bewegung des Roboterkopfs 4 in die Greifpose in Übereinstimmung mit einem Flächenschwerpunkt der Greifflächen 24f..241 der Waren 23f..231 gebracht wird. Der Flächenschwerpunkt eines Sauggreifers 5a liegt im Zentrum des kreisförmigen Sauggreifers 5a, der Flächenschwerpunkt von zwei Sauggreifern 5a, 5b in der Mitte der Verbindungslinie der beiden Kreismittelpunkte der Sauggreifer 5a, 5b und der Flächenschwerpunkt von drei Sauggreifern 5a..5c auf der in der Fig. 8 dargestellten z-Achse. Durch die vorgeschlagenen Maßnahmen kann eine gleichmäßige Belastung der Sauggreifer 5a..5c erreicht, beziehungsweise ein Kippen der aufgenommenen Ware 23f..231 vermieden werden. Insbesondere trifft dies zu, wenn die Massenverteilung in der aufgenommenen Ware 23f..231 homogen ist.

Trifft diese Bedingung nicht oder nicht im ausreichenden Maß zu, dann wird der Flächenschwerpunkt der zu aktivierenden Sauggreifer 5a..5c bei der Berechnung der Greifpose beziehungsweise bei der Bewegung des Roboterkopfs 4 in die Greifpose vorteilhaft in Übereinstimmung mit einem auf die Greiffläche 24f..241 vertikal nach oben projizierten Massenschwerpunkt der genannten Ware 23f..231 gebracht. Auf diese Weise kann eine gleichmäßige Belastung der Sauggreifer 5a..5c auch dann erreicht und ein Kippen der Ware 23f..231 vermieden werden, wenn die Massenverteilung innerhalb der Ware 23f..231 nicht homogen ist. Für die Ausführung dieser Verfahrensvariante ist die Kenntnis der Massenverteilung in der aufzunehmenden Ware 23f..231 erforderlich. Beispielsweise kann diese empirisch ermittelt und in einer Datenbank gespeichert werden. Durch Ermittlung der Greifflächenpose und Zugriff auf die genannte Datenbank kann in Folge der auf die Greiffläche 24f..241 vertikal projizierten Massenschwerpunkt ermittelt werden. Diese Ausführungsvariante eignet sich daher insbesondere für Kombipackungen, die unterschiedlich schwere Waren enthält. In diesem Fall kann beispielsweise auch ein Aufdruck auf diese Kombipackung genützt werden, um die Lage des Massenschwerpunkts der Kombipackung relativ zu der Außenkontur der Verpackung feststellen zu können. In der genannten Datenbank können daher auch Informationen über die Lage des Massenschwerpunkts relativ zu der Verpackung beziehungsweise relativ zu einem Aufdruck auf der genannten Verpackung gespeichert sein. Für die Erkennung des genannten Aufdrucks ist es vorteilhaft, wenn das Sensorsystem zur Erfassung einer Greifflächenpose und einer Greifflächengröße, wie in den Figuren 1 und 2 dargestellt, Kameras 8a..8c umfasst.

Aus der Figur 8 ist weiterhin erkennbar, dass in dem als kistenförmigen Behälter ausgeführten, ersten Warenträger 9a eine Vielzahl an Waren 23f..231 gelagert ist und eine Greifpose für eine dieser Waren 23f..231 berechnet wird. Das heißt, es wird gezielt eine bestimmte Ware 23f..231 aus dem Warenträger 9a entnommen.

Von Vorteil ist es generell, wenn eine Berührung des Roboterkopfs 4 mit einem anderen als der zu greifenden Ware 23f..231 bei der Berechnung der Greifpose für den Roboterkopf 4 beziehungsweise bei der Bewegung des Roboterkopfs 4 in die Greifpose vermieden wird. Gleichermaßen ist es von Vorteil, wenn eine Kollision des Roboterkopfs 4 mit einer Seitenwand des Behälters 9a bei der Berechnung der Greifpose für den Roboterkopf 4 beziehungsweise bei der Bewegung des Roboterkopfs 4 in die Greifpose vermieden wird. Dadurch bleibt einerseits die Lage und Position der übrigen, im Behälter 9a verbleibenden Waren 23g..231 auch bei Entnahme einer bestimmten Ware 23f weitgehend erhalten. Daher kann eine einmal durch die Kameras 8a..8c für mehrere Waren 23f..231 ermittelte Greifflächenpose und Greifflächengröße nach der Entnahme der besagten Ware 23f für die Entnahme einer weiteren Ware 23g..231 weiterverwendet werden. Bevorzugt wird die Greifflächenpose und Greifflächengröße jedoch vor jeder Entnahme einer Ware 23g..231 bestimmt. Darüber hinaus werden durch die vorgeschlagenen Maßnahmen auch Beschädigungen am Behälter 9a beziehungsweise am Roboterkopf 4 vermieden.

Im Speziellen werden mehrere Greifposen berechnet, bei der eine maximale Anzahl an Sauggreifern 5a..5c in Kontakt mit der Greiffläche 24f..241 der genannten Ware 23f..231 steht. In Folge werden die berechneten Greifposen vor der Bewegung des Roboterkopfs 4 auf Kollision mit einem anderen als der zu greifenden Ware 23g..231 und/oder mit einer Seitenwand des Behälters geprüft. Schließlich wird der Roboterkopf 4 in eine der kollisionsfreien Greifposen bewegt. Beispielsweise wären in der Fig. 8 auch dann zwei Sauggreifer 5a und 5b (und damit die maximale Anzahl an Sauggreifern 5a..5c) mit der Greiffläche 24g der Ware 23g in Kontakt, wenn der Roboterkopf 4 180° um die vertikale z-Achse gedreht wäre, jedoch würde dies zu einer Kollision mit einer Seitenwand des Behälters 9a führen. Vorteilhaft wird der Roboterkopf 4 daher nicht in diese Greifpose bewegt.

Bei der Berechnung der Greifpose für den Roboterkopf 4 beziehungsweise bei der Bewegung des Roboterkopfs 4 in die berechnete Greifpose ist es auch von Vorteil, wenn der Roboterkopf 4 für eine Drehung in die Greifpose ausgehend von einer momentanen Pose in jene Richtung gedreht wird, in welche der kleinste Drehwinkel für die genannte Drehung erforderlich ist. Unter Bezugnahme auf die Figur 8 ist es ausgehend von der Greifpose für die Ware 23f von Vorteil, den Roboterkopf 4 für die Aufnahme der Ware 23g etwas (im gezeigten Beispiel ca. 10°) nach links zu drehen. Auf diese Weise kann der Roboterkopf 4 rasch in eine für die Aufnahme einer Ware 23f..231 benötigte Greifpose gedreht werden. Weniger vorteilhaft wäre es, den Roboterkopf 4 ausgehend von der Greifpose für die Ware 23f für die Aufnahme der Ware 23g nach rechts zu drehen. Die genannte Variante bezieht sich dabei nicht nur um Drehungen um die Vertikalachse (z-Achse), sondern alternativ oder zusätzlich auch um Drehungen um eine Horizontalachse (x-Achse und/oder y-Achse), beispielsweise wenn die zu greifenden Ware 23f..231 in gekippter Lage im Behälter 9a liegt oder im Behälter 9a steht.

Insbesondere wird der Roboterkopf 4 bei Vorliegen mehrerer kollisionsfreier Greifposen in jene kollisionsfreie Greifpose bewegt, für die ausgehend von einer momentanen Pose des Roboterkopfs 4 der kürzeste Weg und/oder der kleinste Drehwinkel erforderlich ist. Dadurch werden besonders kurze Taktzeiten erzielt.

Weiterhin ist es von Vorteil, wenn jeder der Sauggreifer 5a..5c gesondert ansteuerbar ist, weil dadurch ein unnötiges Ansaugen von Luft über die nicht benötigten Sauggreifer 5a..5c vermieden werden kann.

Darüber hinaus ist es von Vorteil, wenn ein Haltestatus von jedem der Sauggreifer 5a..5c über (nicht dargestellte) Sensoren gesondert ermittelbar ist, da auf diese Weise festgestellt werden kann, ob durch einen mit der Greiffläche 24f..241 in Kontakt gebrachten Sauggreifer 5a..5c eine Haltekraft aufgebaut wird.

Die Figur 9 zeigt ein Beispiel, bei dem der Behälter 9a sortenrein mit Waren 23g..23k beladen ist. Die Waren 23g..23k liegen überdies so im Behälter 9a, dass jeweils eine gleich große Greiffläche 24b..24k nach oben weist. An dieser Stelle wird angemerkt, dass selbst ein artikelrein beladener Behälter 9a Waren 23g..23k mit unterschiedlicher, nach oben weisender Greiffläche 24b..24k enthalten kann, beispielsweise wenn einige der Waren 23g..23k im Behälter 9a liegen und andere Waren 23g..23k im Behälter 9a stehen. Dementsprechend kann vorgesehen sein, den Roboterkopf 4 um eine horizontale Achse zu drehen, wenn die größte Greiffläche 24g..24k in dieser Lage des Roboterkopfs 4 erfasst werden kann. Denkbar wäre auch, dass eine stehende Ware 23g..23k vor dem Aufnehmen derselben durch den Roboterkopf 4 umgeworfen wird, um leichter in Kontakt mit der größten Greiffläche 24b..24k kommen zu können.

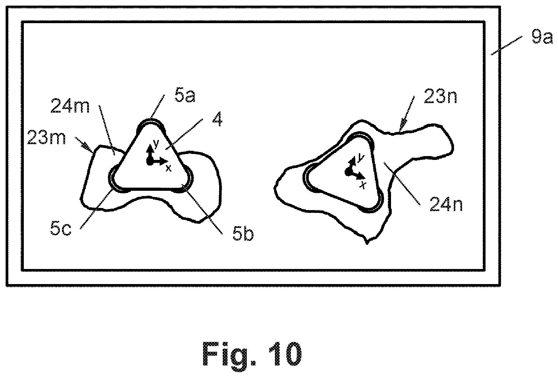

Die in den Figuren 8 und 9 dargestellten Waren 23f..231 weisen jeweils eine rechteckförmige Greiffläche 24f..24l auf. Dies ist aber keine zwingende Bedingung, sondern die Greifflächen der aufzunehmenden Waren können auch unregelmäßig geformt sein, so wie das in der Figur 10 für die Waren 23m und 23n dargestellt ist. Für die Waren 23m und 23n ist das für die Waren 23f..231 bereits Gesagte sinngemäß anwendbar. In diesem Zusammenhang wird auch darauf hingewiesen, dass die Waren 23a..23n nicht notwendigerweise starre Körper sind, sondern auch zum Beispiel als Beutel oder Sack ausgeführt sein können. Insbesondere kann der in Figur 10 dargestellte Behälter 9b wiederum sortenrein mit Waren 23m und 23n beladen sein.

In den Figuren 1 und 2 ist der Ablauf beim Umladen von Waren 23a..23n mithilfe des Roboterkopfs 4 aus einem ersten Warenträger 9a (Quellbehälter) in einen zweiten Warenträger 9b (Zielbehälter) dargestellt. Die als kistenförmiger Behälter ausgebildeten Warenträger 9a und 9b werden für den Umladevorgang mit der Fördertechnik 10a und 10b zum Roboter 1a, 1b hin transportiert und nach dem Umladevorgang vom Roboter 1a, 1b weg transportiert. Der Transport der Waren 23a..23n mithilfe von Ladehilfsmitteln 9a und 9b ist aber keine notwendige Bedingung, sondern die Waren 23a..23n können auch direkt auf der Fördertechnik transportiert werden, wenn diese beispielweise einen Bandförderer, einen Gliederbandförderer und dgl. als erste Förderstrecke 10a und einen Bandförderer, einen Gliederbandförderer und dgl. als zweite Förderstrecke 10b umfasst. Selbstverständlich könnten auch Rollenförderer 10a und 10b vorgesehen sein. Gleichermaßen könnten anstelle der Behälter 9a und 9b auch andere Ladehilfsmittel vorgesehen sein, beispielsweise Tablare oder Kartons. Derartige Ladehilfsmittel umfassen einen Boden, an diesem aufragende Seitenwände und eine durch die Seitenwände begrenzte Beladeöffnung. Denkbar ist aber auch die Verwendung von Paletten als Ladehilfsmittel.

Werden im Bereich des Robotersystems 2a, 2b Ladehilfsmittel (Behälter, Tablare, Kartons) als erste Objektträger 10a verwendet, von welchen oder aus welchen Waren 23a..23n mit den Sauggreifern 5, 5a..5c entnommen werden, so können die (Quell)Ladehilfsmittel vorteilhaft sortenrein mit Waren 23a..23n oder fachunterteilt sortenrein mit Waren 23a..23n beladen sein. Beispielsweise enthält ein erstes Ladehilfsmittel die Ware "A", ein zweites Ladehilfsmittel die Ware "B" usw. Andererseits ist es auch möglich, dass ein Ladehilfsmittel durch Trennwände in mehrere Aufnahmefächer unterteilt ist und unterschiedliche Waren "A", "B" aufnehmen kann, wobei im ersten Aufnahmefach eine Ware "A" und im zweiten Aufnahmefach eine Ware "B" aufgenommen werden kann.

In der Figur 3 ist eine etwas komplexere Anordnung dargestellt, konkret ein Lager- und Kommissioniersystem 12. Dabei werden Waren 23a..23e am Wareneingang 14 angeliefert, auf die erste Förderstrecke 16 geladen, vom Robotersystem 2c von der ersten Förderstrecke 16 auf die zweite Förderstrecken 17a und 17b umgeladen und mithilfe der Regalbediengeräte 20a und 20b in die Lagerregale 19 eingelagert. Die erste Förderstrecke 16 fungiert bei diesem Vorgang als erster Warenträger beziehungsweise Quelle, wohingegen die zweiten Förderstrecken 17a und 17b bei diesem Vorgang als zweite Warenträger beziehungsweise Ziel fungieren.

Ist ein Kommissionierauftrag abzuarbeiten, werden die dem Auftrag zugeordneten Waren 23a..23e mithilfe zumindest eines Regalbediengeräts 20a und 20b aus zumindest einem Lagerregal 19 ausgelagert und auf die dritte Förderstrecke 21 übergeben. In Folge werden die Waren 23a..23e mithilfe der dritten Förderstrecke 21 zum Robotersystem 2d transportiert und von diesem von der dritten Förderstrecke 21 auf die vierte Förderstrecke 22 umgeladen und schließlich mithilfe der vierten Förderstrecke 22 zum Warenausgang 15 transportiert. Die dritte Förderstrecke 21 fungiert bei diesem Vorgang als erster Warenträger beziehungsweise Quelle, wohingegen die vierte Förderstrecke 22 bei diesem Vorgang als zweiter Warenträger beziehungsweise Ziel fungiert.

Wie aus der Figur 3 erkennbar ist, werden die Waren 23a, 23b und 23e direkt auf den als Warenträgern fungierenden Förderstrecken 16, 17a, 17b, 21 und 22 transportiert, wohingegen die Waren 23c und 23d mithilfe von Ladehilfsmitteln 9c..9e transportiert werden, die dementsprechend ebenfalls als Warenträger fungieren. In der Figur 3 liegt also eine gemischte Transportart vor. Denkbar wäre natürlich auch, dass die Waren 23a..23e ausschließlich auf den als Warenträgern fungierenden Förderstrecken 16, 17a, 17b, 21 und 22 transportiert werden oder ausschließlich mithilfe von Ladehilfsmitteln 9c..9e.

Die Ausbildung und Anordnung der Förderstrecken 16, 17a, 17b, 21 und 22 in der Figur 3 ist selbstverständlich nur illustrativ zu sehen, und es sind auch andere Formen und Anordnungen der genannten Förderstrecken 16, 17a, 17b, 21 und 22 denkbar. Insbesondere könnte auch am Wareneingang 14 eine ringförmige Förderstrecke angeordnet sein, oder es könnten lineare Förderstrecken am Warenausgang 15 vorgesehen sein. Die fördertechnische Anbindung des Robotersystems 2c und 2d an den Wareneingang 14, an den Lagerbereich 18 und an den Warenausgang 15 erfolgt auch nicht zwingend über ortsgebundene Fördermittel, so wie das in der Figur 3 dargestellt ist, sondern könnte auch ganz oder teilweise über autonome Transportfahrzeuge (insbesondere autonome Flurförderfahrzeuge) erfolgen, deren Ladeplattformen dann ebenfalls als Warenträger dienen.

Denkbar wäre weiterhin, dass die Waren 23a..23e vom Robotersystem 2c direkt auf die Regalbediengeräte 20a und 20b geladen oder durch das Robotersystem 2d direkt von den Regalbediengeräten 20a und 20b übernommen werden. In diesem Fall dienen die Ladeplattformen der Regalbediengeräte 20a und 20b ebenfalls als Warenträger.

An dieser Stelle wird auch angemerkt, dass die Roboter 1a und 1b nicht notwendigerweise als Gelenkarmroboter ausgeführt sein müssen, sondern beispielsweise auch als Portalroboter ausgebildet sein können.

Weiterhin wird angemerkt, dass das Sensorsystem nicht nur Kameras 8a..8c aufweisen kann, sondern alternativ oder zusätzlich auch einen Raumtiefensensor, einen Laserscanner und/oder einen Ultraschallsensor umfassen kann. Mithilfe dieser Sensoren kann nicht nur ein zweidimensionales, sondern ein dreidimensionales Abbild der in oder auf einem Warenträger (zum Beispiel in den Behältern 9a..9e oder auf den Förderstrecken 10a und 10b) liegenden Waren 23a..23n erfasst werden. Demgemäß kann dadurch auch eine Schrägstellung einer Greiffläche 24a..24n detektiert werden, die beispielsweise durch eine gekippte Lage der aufzunehmenden Ware 23a..23n in oder auf dem Warenträger verursacht wird. Weiterhin kann durch eine dreidimensionale Erfassung auch eine Oberflächenstruktur der Greiffläche 24a..24n ermittelt und die Eignung für das Greifen durch die Sauggreifer 5, 5a..5c festgestellt werden. Beispielsweise eignen sich stark konvexe Oberflächen weniger als Greiffläche 24a..24n, wohingegen ebene Flächen besonders gut als Greifflächen 24a..24n geeignet sind. An dieser Stelle wird angemerkt, dass eine Oberflächenstruktur beziehungsweise eine Schrägstellung einer Greiffläche 24a..24n wegen der verzerrten Abbildung auch mithilfe einer Kamera zur Erfassung eines zweidimensionalen Abbilds festgestellt werden kann, sofern die Form der Greiffläche 24a..24n grundsätzlich bekannt ist.

Es sei auch noch erwähnt, dass die Waren 23a..23n im oder am ersten Warenträger 9a, 9c, 9e, 10a, 16, 21 nebeneinander, übereinander, stehend oder liegend angeordnet sein können, insbesondere ungeordnet (chaotisch) bzw. in Wirrlage.

Denkbar ist darüber hinaus, dass mehrere zweidimensionale Abbilder durch eine Relativbewegung zwischen der Kamera und den Greifflächen 24a..24n erfasst werden und daraus ein dreidimensionales Abbild der genannten Greifflächen 24a..24n berechnet wird.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a, 1b: Roboter
- 2a..2d: Robotersystem
- 3: Roboterbasis
- 4, 4a..4c: Roboterkopf
- 5,5 a..5c: Sauggreifer

- 6: erstes Roboterarm Segment
- 7: zweites Roboterarm Segment
- 8a..8c: Kamera (Sensorsystem)
- 9a..9e: Behälter (Warenträger)
- 10a, 10b: Fördertechnik (Warenträger)

- 11: Steuerung
- 12: Lager- und Kommissioniersystem
- 13: Gebäudewand
- 14: Wareneingang
- 15: Warenausgang

- 16: erste Förderstrecke (Warenträger)
- 17a, 17b: zweite Förderstrecke (Warenträger)
- 18: Lagerbereich
- 19: Lagerregal
- 20a, 20b: Regalbediengerät

- 21: dritte Förderstrecke (Warenträger)
- 22: vierte Förderstrecke (Warenträger)
- 23a..23n: Ware
- 24a..24n: Greiffläche

## Patentansprüche

1. Verfahren zur Steuerung eines Roboters (1a, 1b) in einem Lager- und Kommissioniersystem (12), welcher einen gegenüber einer Roboterbasis (3) bewegbaren Roboterkopf (4, 4a..4c) mit zumindest zwei beabstandeten Sauggreifern (5, 5a..5c) aufweist, bei dem eine Greifflächenpose und eine Greifflächengröße einer Greiffläche (24a..24n) einer Ware (23a..23n) mit Hilfe eines Sensorsystems (8a..8c) ermittelt wird,
**dadurch gekennzeichnet, dass**
- aus der ermittelten Greifflächenpose und Greifflächengröße eine Greifpose für den bewegbaren Roboterkopf (4, 4a..4c) berechnet wird, bei der eine maximale Anzahl an Sauggreifern (5, 5a..5c) in Kontakt mit der Greiffläche der genannten Ware (23a..23n) steht, und
- der Roboterkopf (4, 4a..4c) in die berechnete Greifpose bewegt wird und die mit der Greiffläche (24a..24n) der genannten Ware (23a..23n) in Kontakt stehenden oder in Kontakt kommenden Sauggreifer (5, 5a..5c) aktiviert werden, um die Ware (23a.. 23n) aufzunehmen.

2. Verfahren nach Anspruch 1, **dadurch gekennzeichnet, dass** die Waren (23a..23n) gemäß einem Auftrag mit Hilfe des Roboterkopfs (4, 4a..4c) von oder aus einem ersten Warenträger (9a, 9c, 9e, 10a, 16, 21) in oder auf einen zweiten Warenträger (9b, 9d, 10b, 17a, 17b, 22) umgeladen werden.

3. Verfahren nach Anspruch 2, **dadurch gekennzeichnet, dass** die Waren (23a..23n) gemäß einem Auftrag
- mit Hilfe des ersten Warenträgers (9a, 9c, 9e, 10a, 16, 21) zum Roboter (1a, 1b) transportiert werden,
- mit Hilfe des Roboterkopfs (4, 4a..4c) von oder aus dem ersten Warenträger (9a, 9c, 9e, 10a, 16, 21) in oder auf den zweiten Warenträger (9b, 9d, 10b, 17a, 17b, 22) umgeladen werden und
- mit Hilfe des zweiten Warenträgers (9b, 9d, 10b, 17a, 17b, 22) vom Roboter (1a, 1b) weg transportiert werden.

4. Verfahren nach einem der Ansprüche 1 bis 3, **dadurch gekennzeichnet, dass** im oder auf dem ersten Warenträger (9a, 9c, 9e, 10a, 16, 21) eine Vielzahl an Waren (23a..23n) gelagert sind und die Greifpose für eine dieser Waren (23a..23n) berechnet wird.

5. Verfahren nach Anspruch 4, **dadurch gekennzeichnet, dass** eine Berührung des Roboterkopfs (4, 4a..4c) mit einem anderen als der zu greifenden Ware (23a..23n) bei der Berechnung der Greifpose für den Roboterkopf (4, 4a..4c) beziehungsweise bei der Bewegung des Roboterkopfs (4, 4a..4c) in die Greifpose vermieden wird.

6. Verfahren nach einem der Ansprüche 2 bis 5, **dadurch gekennzeichnet, dass**
- die Ware (23a..23n) aus einem als Behälter ausgeführtem Warenträger (9a..9e) entnommen wird und
- eine Kollision des Roboterkopfs (4, 4a..4c) mit einer Seitenwand des Behälters bei der Berechnung der Greifpose für den Roboterkopf (4, 4a..4c) beziehungsweise bei der Bewegung des Roboterkopfs (4, 4a..4c) in die Greifpose vermieden wird.

7. Verfahren nach einem der Ansprüche 5 oder 6, **dadurch gekennzeichnet, dass**
- mehrere Greifposen berechnet werden, bei der eine maximale Anzahl an Sauggreifern (5, 5a..5c) in Kontakt mit der Greiffläche (24a..24n) der genannten Ware (23a..23n) steht,
- die berechneten Greifposen vor der Bewegung des Roboterkopfs (4, 4a..4c) auf Kollision mit einer anderen als der zu greifenden Ware (23a..23n) und/oder mit einer Seitenwand des Behälters (9a..9e) geprüft werden und
- der Roboterkopf (4, 4a..4c) in eine der kollisionsfreien Greifposen bewegt wird.

8. Verfahren nach einem der Ansprüche 1 bis 6, **dadurch gekennzeichnet, dass** der Roboterkopf (4, 4a..4c) für eine Drehung in die berechnete Greifpose in jene Richtung gedreht wird, in welche ausgehend von einer momentanen Pose der kleinste Drehwinkel für die genannte Drehung erforderlich ist.

9. Verfahren nach Anspruch 7 und 8, **dadurch gekennzeichnet, dass** der Roboterkopf (4, 4a..4c) in jene kollisionsfreie Greifpose bewegt wird, für die ausgehend von einer momentanen Pose des Roboterkopfs (4, 4a..4c) der kürzeste Weg und/oder der kleinste Drehwinkel erforderlich ist.

10. Verfahren nach einem der Ansprüche 1 bis 9, **dadurch gekennzeichnet, dass** ein Flächenschwerpunkt der zu aktivierenden Sauggreifer (5, 5a..5c) bei der Berechnung der Greifpose für den Roboterkopf (4, 4a..4c) beziehungsweise bei der Bewegung des Roboterkopfs (4, 4a..4c) in die Greifpose in Übereinstimmung mit einem Flächenschwerpunkt der Greiffläche (24a..24n) der genannten Ware (23a..23n) gebracht wird.

11. Verfahren nach einem der Ansprüche 1 bis 9, **dadurch gekennzeichnet, dass** ein Flächenschwerpunkt der zu aktivierenden Sauggreifer (5, 5a..5c) bei der Berechnung der Greifpose beziehungsweise bei der Bewegung des Roboterkopfs (4, 4a..4c) in die Greifpose in Übereinstimmung mit einem auf die Greiffläche (24a..24n) vertikal projizierten Massenschwerpunkt der genannten Ware (23a..23n) gebracht wird.

12. Robotersystem (2a..2d), umfassend
- einen Roboter (1a, 1b) mit einem gegenüber einer Roboterbasis (3) bewegbaren Roboterkopf (4, 4a..4c), welcher mit zumindest zwei beabstandeten Sauggreifern (5, 5a..5c) ausgestattet ist,
- ein Sensorsystem (8a..8c) zur Erfassung einer Greifflächenpose und einer Greifflächengröße einer Greiffläche (24a..24n) einer Ware (23a..23n),
**gekennzeichnet durch**
- eine Steuerung (11), welche dazu eingerichtet ist, aus der ermittelten Greifflächenpose und Greifflächengröße eine Greifpose für den bewegbaren Roboterkopf (4, 4a..4c) zu berechnen, bei der eine maximale Anzahl an Sauggreifern (5, 5a..5c) in Kontakt mit der Greiffläche (24a..24n) der genannten Ware (23a..23n) steht, den Roboterkopf (4, 4a..4c) in die berechnete Greifpose zu bewegen und die mit der Greiffläche (24a..24n) der genannten Ware (23a..23n) in Kontakt stehenden oder in Kontakt kommenden Sauggreifer (5, 5a..5c) zu aktivieren, um die Ware (23a..23n) aufzunehmen.

13. Robotersystem (2a..2d) nach Anspruch 12, **dadurch gekennzeichnet, dass** das Sensorsystem (8a..8c) eine Kamera und/oder einen Raumtiefensensor und/oder einen Laserscanner und/oder einen Ultraschallsensor umfasst.

14. Robotersystem (2a..2d) nach Anspruch 12 oder 13, **dadurch gekennzeichnet, dass** jeder der Sauggreifer (5, 5a..5c) gesondert ansteuerbar ist.

15. Robotersystem (2a..2d) nach einem der Ansprüche 12 bis 14, **dadurch gekennzeichnet, dass** ein Haltestatus von jedem der Sauggreifer (5, 5a..5c) gesondert ermittelbar ist.

16. Robotersystem (2a..2d) nach einem der Ansprüche 12 bis 15, **dadurch gekennzeichnet, dass** der Roboter (1a, 1b) genau drei Sauggreifer (5, 5a..5c) aufweist.

17. Robotersystem (2a..2d) nach einem der Ansprüche 12 bis 16, **dadurch gekennzeichnet, dass** der Roboter (1a, 1b) als Gelenkarmroboter oder Portalroboter ausgebildet ist.

18. Lager- und Kommissioniersystem (12) zum Kommissionieren von Waren (23a..23n), umfassend einen Lagerbereich (18) zum Lagern von Waren (23a..23n) und einen Arbeitsplatz zum Kommissionieren / Umpacken von Waren (23a..23n) mit einem Robotersystem (2a..2d), **dadurch gekennzeichnet, dass** das genannte Robotersystem (2a..2d) nach einem der Ansprüche 12 bis 17 ausgebildet ist.

19. Lager- und Kommissioniersystem (12) nach Anspruch 18, **dadurch gekennzeichnet, dass** der Arbeitsplatz zum automatisierten Kommissionieren von Waren (23a..23n) ausgebildet ist, und eine erste Fördertechnik zum Transport von Waren (23a..23n) in oder auf ersten Warenträgern (9a, 9c, 9e, 10a, 16, 21) zwischen dem Lagerbereich (18) und dem Roboter (1a, 1b) am Arbeitsplatz angeordnet ist, und/oder eine zweite Fördertechnik zum Abtransport von Waren (23a..23n) in oder auf zweiten Warenträgern (9b, 9d, 10b, 17a, 17b, 22) zwischen dem Lagerbereich (18) und dem Roboter (1a, 1b) am Arbeitsplatz vorgesehen ist, wobei der Roboter (1a, 1b) dazu ausgebildet ist, zumindest eine Ware (23a..23n) von oder aus einem ersten Warenträger (9a, 9c, 9e, 10a, 16, 21) zu einem Auftrag aufzunehmen und die zumindest eine Ware (23a.. 23n) in oder auf den zweiten Warenträger (9b, 9d, 10b, 17a, 17b, 22) zu diesem Auftrag abzulegen.

## Claims

1. A method for controlling a robot (1a, 1b) in a storage and order-picking system (12), said robot (1a, 1b) having a robot head (4, 4a..4c) which has at least two suction grippers (5, 5a..5c) spaced apart from one another and which is movable in relation to a robot base (3), with a gripping surface pose and a gripping surface size of a gripping surface (24a..24n) of a good (23a..23n) being determined with the aid of a sensor system (8a..8c),
**characterized in that**
- a gripping pose for the movable robot head (4, 4a..4c), in which a maximum number of suction grippers (5, 5a..5c) is in contact with the gripping surface of the mentioned good (23a..23n), is calculated based on the determined gripping surface pose and gripping surface size, and
- the robot head (4, 4a..4c) is moved into the calculated gripping pose and the suction grippers (5, 5a..5c) that are or are coming into contact with the gripping surface (24a..24n) of the mentioned good (23a..23n) are activated so as to collect the good (23a.. 23n).

2. The method according to claim 1, **characterized in that** the goods (23a..23n) are transferred from or out of a first goods carrier (9a, 9c, 9e, 10a, 16, 21) into or onto a second goods carrier (9b, 9d, 10b, 17a, 17b, 22) with the aid of the robot head (4, 4a..4c) according to an order.

3. The method according to claim 2, **characterized in that**, according to an order, the goods (23a..23n)
- are transported to the robot (1a, 1b) with the aid of the first goods carrier (9a, 9c, 9e, 10a, 16, 21),
- are transferred from or out of the first goods carrier (9a, 9c, 9e, 10a, 16, 21) into or onto the second goods carrier (9b, 9d, 10b, 17a, 17b, 22) with the aid of the robot head (4, 4a..4c), and
- are transported away from the robot (1a, 1b) with the aid of the second goods carrier (9b, 9d, 10b, 17a, 17b, 22).

4. The method according to one of claims 1 to 3, **characterized in that** a plurality of goods (23a..23n) are stored in or on the first goods carrier (9a, 9c, 9e, 10a, 16, 21) and the gripping pose for one of these goods (23a..23n) is calculated.

5. The method according to claim 4, **characterized in that** a contact of the robot head (4, 4a..4c) with other goods than the goods (23a..23n) to be collected is prevented in the calculation of the gripping pose for the robot head (4, 4a..4c) and/or in the motion of the robot head (4, 4a..4c) into the gripping pose.

6. The method according to one of claims 2 to 5, **characterized in that**
- the goods (23a..23n) are removed from a goods carrier (9a..9e) designed as a container, and
- a collision of the robot head (4, 4a..4c) with a side wall of the container is prevented in the calculation of the gripping pose for the robot head (4, 4a..4c) and/or in the motion of the robot head (4, 4a..4c) into the gripping pose.

7. The method according to one of claims 5 or 6, **characterized in that**
- multiple gripping poses are calculated, in which a maximum number of suction grippers (5, 5a..5c) is in contact with the gripping surface (24a..24n) of the mentioned good (23a..23n),
- the calculated gripping poses are checked for collisions with other goods than the goods (23a..23n) to be collected and/or with a side wall of the container (9a..9e) prior to the movement of the robot head (4, 4a..4c), and
- the robot head (4, 4a..4c) is moved into one of the collision-free gripping poses.

8. The method according to one of claims 1 to 6, **characterized in that** for rotation into the calculated gripping pose the robot head (4, 4a..4c) is rotated in the direction in which, starting out from a current pose, the smallest rotational angle for the mentioned rotation is required.

9. The method according to claims 7 and 8, **characterized in that** the robot head (4, 4a..4c) is moved into that collision-free gripping pose for which based on the current pose of the robot head (4, 4a..4c) the shortest way and/or the smallest rotation angle is required.

10. The method according to one of claims 1 to 9, **characterized in that** in the calculation of the gripping pose for the robot head (4, 4a..4c) and/or in the motion of the robot head (4, 4a..4c) into the gripping pose, a centroid of the area of the suction grippers (5, 5a..5c) to be activated is brought into conformity with a centroid of the area of the gripping surface (24a..24n) of the mentioned good (23a..23n).

11. The method according to one of claims 1 to 9, **characterized in that** in the calculation of the gripping pose and/or in the motion of the robot head (4, 4a..4c) into the gripping pose, a centroid of the area of the suction grippers (5, 5a..5c) to be activated is brought into conformity with a center of mass of the mentioned good (23a..23n) projected vertically onto the gripping surface (24a..24n).

12. A robot system (2a..2d), comprising
- a robot (1a, 1b) having a robot head (4, 4a..4c) which is movable in relation to a robot base (3) and which is equipped with at least two suction grippers (5, 5a..5c) spaced apart from one another,
- a sensor system (8a..8c) for detecting a gripping surface pose and a gripping surface size of a gripping surface (24a..24n) of a good (23a..23n),
**characterized in that**
- a controller (11) which is configured to calculate a gripping pose for the movable robot head (4, 4a..4c), in which a maximum number of suction grippers (5, 5a..5c) is in contact with the gripping surface (24a..24n) of the mentioned good (23a..23n), from the determined gripping surface pose and gripping surface size, to move the robot head (4, 4a..4c) into the calculated gripping pose and to activate the suction grippers (5, 5a..5c) that are or are coming into contact with the gripping surface (24a..24n) of the mentioned good (23a..23n), so as to collect the good (23a..23n).

13. The robot system (2a..2d) according to claim 12, **characterized in that** the sensor system (8a..8c) comprises a camera and/or a room depth sensor and/or a laser scanner and/or an ultrasonic sensor.

14. The robot system (2a..2d) according to claim 12 or 13, **characterized in that** each one of the suction grippers (5, 5a..5c) can be controlled separately.

15. The robot system (2a..2d) according to one of claims 12 to 14, **characterized in that** a holding status of each one of the suction grippers (5, 5a..5c) can be determined separately.

16. The robot system (2a..2d) according to one of claims 12 to 15, **characterized in that** the robot (1a, 1b) comprises precisely three suction grippers (5, 5a..5c).

17. The robot system (2a..2d) according to one of claims 12 to 16, **characterized in that** the robot (1a, 1b) is designed as a jointed-arm robot or a gantry robot.

18. A storage and order-picking system (12) for order-picking of goods (23a..23n) comprising a storage area (18) for storing goods (23a..23n) and a working area for picking/repacking goods (23a..23n) using a robot system (2a..2d), **characterized in that** said robot system (2a..2d) is designed according to one of claims 12 to 17.

19. The storage and order-picking system (12) according to claim 18, **characterized in that** the working area is designed for the automated order-picking of goods (23a..23n), and a first conveying device for transporting goods (23a..23n) in or on first goods carriers (9a, 9c, 9e, 10a, 16, 21) is arranged between the storage area (18) and the robot (1a, 1b) in the working area, and/or a second conveying device for transporting goods (23a..23n) in or on second goods carriers (9b, 9d, 10b, 17a, 17b, 22) is provided between the storage area (18) and the robot (1a, 1b) in the working area, wherein the robot (1a, 1b) is designed for collecting at least one good (23a..23n) from or out of the first goods carrier (9a, 9c, 9e, 10a, 16, 21) for an order and to place the at least one good (23a.. 23n) in or on the second goods carrier (9b, 9d, 10b, 17a, 17b, 22) for this order.

## Revendications

1. Procédé de contrôle d'un robot (1a, 1b) dans un système de stockage et de préparation de commandes (12), qui comprend une tête de robot (4, 4a...4c), mobile par rapport à une base de robot (3), avec au moins deux ventouses (5, 5a...5c) distantes entre elles, dans lequel une position de surface de préhension et une taille de surface de préhension d'une surface de préhension (24a...24n) d'un article (23a...23n) est déterminée à l'aide d'un système de capteur (8a...8c),
**caractérisé en ce que**
- à partir de la position de surface de préhension et de taille de surface de préhension, une position de préhension pour la tête de robot mobile (4, 4a...4c) est calculée, dans laquelle un nombre maximal de ventouses (5, 5a...5c) sont en contact avec la surface de préhension de l'article (23a...23n) mentionné et
- la tête de robot (4, 4a...4c) est déplacée vers la position de préhension calculée et les ventouses (5, 5a...5c) déjà en contact ou entrant en contact avec la surface de préhension (24a...24n) de l'article (23a...23n) mentionné sont activées afin de prendre l'article (23a...23n) en charge.

2. Procédé selon la revendication 1, **caractérisé en ce que** les articles (23a... 23n) sont transférés, selon une commande, à l'aide de la tête de robot (4, 4a... 4c) de ou à partir d'un premier support d'articles (9a, 9c, 9e, 10a, 16, 21) dans ou sur un deuxième support d'articles (9b, 9d, 10b, 17a, 17b, 22).

3. Procédé selon la revendication 2, **caractérisé en ce que** les articles (23a.. 23n), selon une commande
- sont transportées à l'aide du premier support d'articles (9a, 9c, 9e, 10a, 16, 21) vers le robot (1a, 1b),
- sont transférés à l'aide de la tête de robot (4, 4a... 4c) de ou à partir d'un premier support d'articles (9a, 9c, 9e, 10a, 16, 21) dans ou sur un deuxième support d'articles (9b, 9d, 10b, 17a, 17b, 22) et
- sont transportés loin du robot (1a, 1b) à l'aide du deuxième support d'articles (9b, 9d, 10b, 17a, 17b, 22).

4. Procédé selon l'une des revendications 1 à 3, **caractérisé en ce que**, dans ou sur le premier support d'articles (9a, 9c, 9e, 10a, 16, 21), sont stockés une pluralité d'articles (23a... 23n) et la position de préhension est calculée pour un de ces articles (23a... 23n).

5. Procédé selon la revendication 4, **caractérisé en ce qu'**un contact de la tête de robot (4, 4a... 4c) avec un autre article que l'article à prendre (23a... 23n) est évité lors du calcul de la position de préhension pour la tête de robot (4, 4a... 4c), respectivement lors du déplacement de la tête de robot (4, 4a... 4c) vers la position de préhension.

6. Procédé selon l'une des revendications 2 à 5, **caractérisé en ce que**
- l'article (23a... 23n) est prélevé dans un support d'articles (9a... 9e) conçu comme un récipient et
- une collision de la tête de robot (4, 4a... 4c) avec une paroi latérale du récipient est évitée lors du calcul de la position de préhension pour la tête de robot (4, 4a... 4c), respectivement lors du déplacement de la tête de robot (4, 4a... 4c) vers la position de préhension.

7. Procédé selon l'une des revendications 5 ou 6, **caractérisé en ce que**
- plusieurs positions de préhension sont calculées, dans lesquelles un nombre maximal de ventouses (5, 5a... 5c) sont en contact avec la surface de préhension (24a... 24n) de l'article (23a... 23n) mentionné,
- les positions de préhension calculées sont vérifiées avant le déplacement de la tête de robot (4, 4a... 4c) en collision avec un autre article (23a... 23n) que l'article à saisir et/ou avec une paroi latérale du récipient (9a... 9e) et
- la tête de robot (4, 4a... 4c) est déplacée vers une des positions de préhension sans collision.

8. Procédé selon l'une des revendications 1 à 6, **caractérisé en ce que** la tête de robot (4, 4a... 4c) est tournée pour une rotation vers la position de préhension calculée dans la direction dans laquelle, à partir d'une position momentanée, l'angle de rotation le plus faible est nécessaire pour la rotation mentionnée.

9. Procédé selon la revendication 7 et 8, **caractérisé en ce que** la tête de robot (4, 4a... 4c) est déplacée vers la position de préhension sans collision pour laquelle, à partir d'une position momentanée de la tête de robot (4, 4a... 4c), le trajet le plus court et/ou l'angle de rotation le plus faible est nécessaire.

10. Procédé selon l'une des revendications 1 à 9, **caractérisé en ce qu'**un centre de gravité de surface des ventouses (5, 5a... 5c) à activer est amené, lors du calcul de la position de préhension pour la tête de robot (4, 4a... 4c), respectivement lors du déplacement de la tête de robot (4, 4a... 4c) vers la position de préhension, en coïncidence avec un centre de gravité de la surface de préhension (24a... 24n) de l'article (23a... 23n) mentionné.

11. Procédé selon l'une des revendications 1 à 9, **caractérisé en ce qu'**un centre de gravité de surface des ventouses (5, 5a... 5c) à activer est amené, lors du calcul de la position de préhension, respectivement lors du déplacement de la tête de robot (4, 4a... 4c) dans la position de préhension, en coïncidence avec un centre de gravité de masse de l'article (23a... 23n) mentionné, projeté verticalement sur la surface de préhension (24a... 24n).

12. Système robotique (2a... 2d) comprenant
- un robot (1a, 1b) avec une tête de robot (4, 4a... 4c) mobile par rapport à une base de robot (3), qui est équipée d'au moins deux ventouses (5, 5a... 5c) distantes entre elles,
- un système de capteur (8a... 8c) pour la détection d'une position de surface de préhension et d'une taille de surface de préhension (24a... 24n) d'un article (23a... 23n),
**caractérisé par**
- un dispositif de commande (11), qui est conçu pour calculer, à partir de la position de surface de préhension et de la taille de surface de préhension, une position de préhension pour la tête de robot mobile (4, 4a... 4c), dans laquelle un nombre maximal de ventouses (5, 5a... 5c) sont en contact avec la surface de préhension (24a... 24n) de l'article (23a... 23n) mentionné, pour déplacer la tête de robot (4, 4a... 4c) vers la position de préhension calculée et pour activer les ventouses (5, 5a... 5c) déjà en contact ou entrant en contact avec la surface de préhension (24a... 24n) de l'article (23a... 23n), afin de prendre l'article (23a... 23n) en charge.

13. Système de robot (2a... 2d) selon la revendication 12, **caractérisé en ce que** le système de capteur (8a... 8c) comprend une caméra et/ou un capteur de profondeur spatiale et/ou un scanner laser et/ou un capteur à ultrasons.

14. Système de robot (2a... 2d) selon la revendication 12 ou 13, **caractérisé en ce que** chacune des ventouses (5, 5a... 5c) peut être contrôlée de manière séparée.

15. Système de robot (2a... 2d) selon l'une des revendications 12 à 14, **caractérisé en ce qu'**un état d'arrêt peut être déterminé de manière séparée par chacune des ventouses (5, 5a... 5c).

16. Système de robot (2a... 2d) selon l'une des revendications 12 à 15, **caractérisé en ce que** le robot (1a, 1b) comprend exactement trois ventouses (5, 5a... 5c).

17. Système de robot (2a... 2d) selon l'une des revendications 12 à 16, **caractérisé en ce que** le robot (1a, 1b) est conçu comme un robot à bras articulé ou un robot à portique.

18. Système de stockage et de préparation de commandes (12) pour la préparation de commandes d'articles (23a... 23n), comprenant une zone de stockage (18) pour le stockage d'articles (23a... 23n) et un poste de travail pour la préparation des commandes / emballage des articles (23a... 23n) avec un système de robot (2a... 2d), **caractérisé en ce que** le système de robot (2a... 2d) mentionné est conçu selon l'une des revendications 12 à 17.

19. Système de stockage et de préparation de commandes (12) selon la revendication 18, **caractérisé en ce que** le poste de travail est conçu pour la préparation de commandes automatisées d'articles (23a... 23n) et un premier dispositif de convoyage est disposé sur le poste de travail pour le transport des articles (23a... 23n) dans ou sur des premiers supports d'articles (9a, 9c, 9e, 10a, 16, 21) entre la zone de stockage (18) et le robot (la, 1b), et/ou un deuxième dispositif de convoyage est prévu sur le poste de travail pour l'évacuation des articles (23a... 23n) dans ou sur des deuxièmes supports d'articles (9b, 9d, 10b, 17a, 17b, 22) entre la zone de stockage (18) et le robot (1a, 1b),dans lequel le robot (1a, 1b)à est conçu pour prendre en charge au moins un article (23a... 23n) de ou à partir d'un premier support d'articles (9a, 9c, 9e, 10a, 16, 21) pour une première commande et pour déposer, pour cette commande, l'au moins un article (23a... 23n) dans ou sur le deuxième support d'articles (9b, 9d, 10b, 17a, 17b, 22).
